# EUROPÄISCHE PATENTANMELDUNG

(11) **EP 1 457 767 A1**
(43) Veröffentlichungstag der Anmeldung: **15.09.2004**
(21) Anmeldenummer: 04002493.7
(22) Anmeldetag: 05.02.2004
(51) Int. Cl.: G01L 9/06, G01R 19/25, H03M 1/00

(54) **Messen eines Druckes mit einer Brücke und reduzierter Spannung für den A/D-Wandler**

(30) Priorität: 21.02.2003 DE 10307501
(71) Anmelder: Haldex Brake Products GmbH, 69123 Heidelberg (DE)
(72) Erfinder: Nöcker, Joachim, 69412 Eberbach (DE)
(74) Vertreter: Patentanwälte Rehberg + Hüppe

(57) **Zusammenfassung**

Ein Verfahren zum Messen eines Druckes auf einem Nutzfahrzeug arbeitet mit einem eine Ohmsche Messbrücke aufweisenden monolithischen keramischen Drucksensor (1). Die Messbrücke des Drucksensors und ein Eingang eines A/D-Wandlers (6) werden aus einem Gleichspannungsversorgungsteil (3) mit Gleichspannung versorgt. Der Referenzeingang des A/D-Wandlers wird mit einer Referenzspannung versorgt. Das von der Ohmschen Messbrücke abgegebene Differenzspannungssignal wird verstärkt (13) und einem Eingang (7) des A/D-Wandlers zur Auswertung des von der Messbrücke abgegebenen Differenzspannungssignals zugeführt. Die Messbrücke des Drucksensors wird mit einer über dem zulässigen Wert der Spannungsversorgung für den A/D-Wandler liegenden Gleichspannung (3) versorgt. Der A/D-Wandler wird an einen weiteren Eingang (21) mit einer zur Gleichspannungsversorgung der Messbrücke proportionalen reduzierten Gleichspannung (24) versorgt. Die der Messbrücke des Drucksensors zugeführte Gleichspannung wird mit einer Soll-Versorgungsgleichspannung der Messbrücke des Drucksensors verglichen und das verstärkte Differenzspannungssignal entsprechend der Abweichung der Gleichspannungsversorgung der Messbrücke des Drucksensors von der Soll-Versorgungsgleichspannung korrigiert.

## Beschreibung

Die Erfindung bezieht sich auf ein Verfahren zum Messen eines Druckes auf einem Nutzfahrzeug mit einem eine Ohmsche Messbrücke aufweisenden monolithischen keramischen Drucksensor, wobei die Messbrücke des Drucksensors und ein Eingang eines A/D-Wandlers aus einem Spannungsversorgungsteil mit Gleichspannung versorgt wird, der Referenzeingang des A/D-Wandlers mit einer Referenzgleichspannung versorgt wird und wobei das von der Ohmschen Messbrücke abgegebene Differenzspannungssignal verstärkt und einem Eingang des A/D-Wandlers zur Auswertung des von der Messbrücke abgegebenen Differenzspannungssignals zugeführt wird. Die Erfindung bezieht sich auch auf eine Auswerteschaltung für einen eine Ohmsche Messbrücke aufweisenden monolithischen keramischen Drucksensor, mit einem Gleichspannungsversorgungsteil für die Messbrücke des Drucksensors, einem dem Drucksensor nachgeschalteten Verstärker und einem Eingänge und einen Differenzeingang aufweisenden A/D-Wandler zur Auswertung der von der Messbrücke abgegebenen Differenzspannungssignale, einem an den Referenzeingang des A/D-Wandlers angeschlossenen Referenzspannungsversorgungsteil und eine Leitung zur Übertragung der von dem Gleichspannungsversorgungsteil für die Messbrücke bereitgestellten Gleichspannung am einen Eingang des A/D-Wandlers. Unter einem eine Ohmsche Messbrücke aufweisenden monolithischen keramischen Drucksensor wird ein Dickfilm-Drucksensor verstanden.

Die Erfassung des Druckes mit Drucksensoren in der Druckluftanlage eines Nutzfahrzeuges hat einen hohen Stellenwert, da mehr und mehr die Messung mit Manometern abgelöst werden soll. Eine Fahrzeugelektronik kann nur elektronische Signale auswerten. Sie kann mechanische Drucksignale nicht verarbeiten. Die elektronische Erfassung des Druckes reduziert und vereinfacht den Installationsaufwand auf einem Nutzfahrzeug, da sich elektronische Signale leichter und einfacher übertragen lassen.

### STAND DER TECHNIK

Eine Auswerteschaltung der eingangs beschriebenen Art ist aus der DE 195 31 386 C2 bekannt. Der Drucksensor weist eine Ohmsche Messbrücke auf, die über ein Versorgungsteil mit Gleichspannung versorgt wird. Den Ausgängen des Messbrücke ist ein Verstärker nachgeschaltet, der im Einzelnen aus zwei Verstärkern besteht, deren nichtinvertierende Eingänge mit den Ausgängen der Messbrücke verbunden sind. Innerhalb der Auswerteschaltung ist ein A/D-Wandler zur Auswertung der von der Messbrücke abgegebenen Spannungssignale vorgesehen. Der A/D-Wandler weist einen Eingang sowie mehrere Referenzeingänge auf. In einer ersten Ausführungsform versorgt das Gleichspannungsversorgungsteil zum einen die Messbrücke des Drucksensors. Zum anderen besteht eine Leitungsverbindung zu dem Referenzeingang des A/D-Wandlers. Damit wird hier eine ratiometrische Messung verwirklicht nämlich die Versorgung des Drucksensors einerseits und des A/D-Wandlers andererseits aus der gleichen Spannungsquelle, wobei die Leitung an den A/D-Wandler zu einem Referenzeingang desselben führt. Der A/D-Wandler stellt ein Ausgangssignal in Form von binären Zahlen zur Verfügung. Dieses Ausgangssignal ist relativ unempfindlich gegenüber Schwankungen der Spannungsversorgung über das Gleichspannungsversorgungsteil. Nachteilig hieran ist, dass der A/D-Wandler nur begrenzte Spannungen verträgt und damit die Bemessung des Gleichspannungsversorgungsteils begrenzt ist. In der Folge wird der Drucksensor auch nur mit dieser begrenzten Spannung versorgt. Damit ergeben sich am Ausgang des Drucksensors auch nur entsprechend geringe Ausgangssignale, die empfindlich gegen elektromagnetische Felder sind. Diese Ausgangssignale müssen verstärkt werden, wobei auch die Fehler verstärkt werden. Das dem A/D-Wandler zugeführte Signal ist daher mit diesen Fehlern behaftet. In einer zweiten Ausführungsform ist der Ausgang des Gleichspannungsversorgungsteils nicht mit dem Referenzeingang des A/D-Wandlers, sondern mit einem weiteren Eingang des A/D-Wandlers verbunden. In Ergänzung dazu muss der A/D-Wandler an einem seiner Referenzeingänge mit einer Referenzspannung versorgt werden. Auch diese Referenzspannung ist begrenzt. Dem A/D-Wandler darf auch an seinem Eingang keine Spannung zugeführt werden, für die er nicht ausgelegt ist. Dies bedeutet, dass auch bei dieser zweiten Anschlussmöglichkeit die Auslegung des Gleichspannungsversorgungsteils begrenzt ist. Damit kann auch der Drucksensor wie bei der ersten Ausführungsform nur mit einer begrenzten Spannung versorgt werden.

### AUFGABE DER ERFINDUNG

Der Erfindung liegt die Aufgabe zugrunde, ein Verfahren und eine zur Ausführung des Verfahrens geeignete Auswerteschaltung bereitzustellen, bei dem bzw. bei der das von dem Drucksensor bereitgestellte und an den A/D-Wandler übertragene Signal unempfindlicher gegen elektromagnetische Felder ist.

### LÖSUNG

Erfindungsgemäß wird dies bei einem Verfahren der eingangs beschriebenen Art dadurch erreicht, dass die Messbrücke des Drucksensors mit einer über dem zulässigen Wert der Spannungsversorgung für den A/D-Wandler liegenden Gleichspannung versorgt wird, dass der A/D-Wandler an einem weiteren Eingang mit einer zur Gleichspannungsversorgung der Messbrücke proportionalen reduzierten Gleichspannung versorgt wird und dass die der Messbrücke des Drucksensors zugeführte Gleichspannung mit einer Soll-Versorgungsgleichspannung der Messbrücke des Drucksensors verglichen und das verstärkte Differenzspannungssignal entsprechend der Abweichung der Gleichspannungsversorgung der Messbrücke des Drucksensors von der Soll-Versorgungsgleichspannung korrigiert wird.

### BESCHREIBUNG DER ERFINDUNG

Die Erfindung geht von dem Gedanken aus, die bisher im Stand der Technik vorhandene Begrenzung der Spannungsversorgung der Messbrücke des Drucksensors aufzugeben und auf einen vergleichsweise höheren Wert anzuheben, der über dem Wert liegt, mit dem der A/D-Wandler mit Spannung versorgt werden muss. Da der A/D-Wandler mit Gleichspannung versorgt werden soll und muss, für die er ausgelegt ist, erfolgt dies mit einer proportionalen reduzierten Gleichspannung aus der gleichen Spannungsquelle über die auch die Messbrücke des Drucksensors versorgt wird. Diese reduzierte Gleichspannung wird nicht dem Referenzeingang, sondern einem weiteren Eingang des A/D-Wandlers zugeführt. Aus dieser zugeführten reduzierten Gleichspannung wird auf die Gleichspannung des Gleichspannungsversorgungsteils für die Messbrücke des Drucksensors geschlossen und das von dem Drucksensor abgegebene und verstärkte Differenzspannungssignal wird entsprechend der Abweichung der Gleichspannungsversorgung der Messbrücke des Drucksensors von dieser Soll-Versorgungsgleichspannung korrigiert.

Damit ergeben sich verschiedene Vorteile. Am Ausgang des Drucksensors entsteht ein Spannungssignal, welches entsprechend der Versorgungsspannung ausgebildet ist. Dieses Signal ist vergleichsweise größer, so dass sich an ihm die Einflüsse elektromagnetischer Felder nur reduziert auswirken können. Ein weiterer Vorteil liegt darin, dass dieses größere Signal vergleichsweise weniger verstärkt werden muss, da auch das verstärkte Signal dem A/D-Wandler zugeführt wird und damit in seiner Höhe begrenzt ist. Damit wird auch die Verstärkung einfacher.

Mit dem erfindungsgemäßen Verfahren ist ein weiterer bedeutender Vorteil verbunden. Die Spannungsversorgung des Drucksensors kann nach dessen Eigenschaften und Eigenheiten völlig unabhängig von der Begrenztheit des A/D-Wandlers festgelegt und angepasst werden.

Insbesondere kann zur Korrektur des verstärkten Differenzspannungssignals dieses mit dem Verhältnis der der Messbrücke des Drucksensors zuzuführenden Soll-Versorgungsspannung zu der der Messbrücke des Drucksensors zugeführten Gleichspannung multipliziert werden.

Eine auch zur Durchführung des Verfahrens geeignete Auswerteschaltung kennzeichnet sich erfindungsgemäß dadurch, dass das Gleitspannungsversorgungsteil zur Abgabe einer über den zulässigen Wert der Spannungsversorgung des A/D-Wandlers liegenden Gleichspannung ausgebildet ist. Dabei ist in der zur Übertragung der von dem Gleichspannungsversorgungsteil für die Messbrücke bereitgestellten Gleichspannung an einem Eingang des A/D-Wandlers eine Einrichtung zur proportionalen Reduzierung der über dem zulässigen Wert der Spannungsversorgung des A/D-Wandlers liegenden Gleichspannung des Gleichspannungsversorgungsteils auf einen unterhalb des zulässigen Wertes der Gleichspannung am Eingang des A/D-Wandlers liegenden Wert vorgesehen.

Die Erfindung geht von dem Gedanken aus, nicht die hohe Spannung des Gleichspannungsversorgungsteils an den A/D-Wandler zu übertragen, sondern eine im Verhältnis dazu reduzierte Spannung, die der A/D-Wandler noch verträgt. Aus dieser reduzierten Spannung kann aber andererseits auch die Spannung des Gleichspannungsversorgungsteils geschlossen werden, über die der Drucksensor mit Spannung versorgt wird. Aufgrund dieser hohen Versorgungsspannung des Drucksensors wird auch dessen Ausgangssignal unempfindlicher gegen den Einfluss elektromagnetischer Felder. Zum zweiten ergibt sich eine geringere notwendige Verstärkung, um dieses dann so verstärkte Signal dem A/D-Wandler zuzuführen.

Die Einrichtung zur proportionalen Reduzierung der Gleichspannung des Gleichspannungsversorgungsteils lässt verschiedene Realisierungsmöglichkeiten zu. Eine sehr wirkungsvolle, einfach aufgebaute und damit preisgünstige Möglichkeit besteht in der Verwendung bzw. Ausbildung eines Ohmschen Spannungsteilers. Ein solcher Spannungsteiler benötigt zwei in Reihe geschaltete Widerstände. Zwischen diesen beiden Widerständen zweigt der Leitungsteil ab, der zu dem A/D-Wandler führt.

Vorzugsweise weist der Ohmsche Spannungsteiler damit zwei in Reihe geschaltete feste Widerstände auf. Auf die Verwendung von einstellbaren Widerständen wird sinnvollerweise verzichtet. Eine Anpassung an unterschiedliche Anwendungsfälle kann durch die entsprechende Bemessung der Widerstände erfolgen.

Eine andere Möglichkeit für die Realisierung dieser Einrichtung kann in einem Gleichspannung/Gleichspannungs-Wandler bestehen, der ein festes oder einstellbares Übersetzungsfeld mit aufweisen kann. In der von dem Gleichspannungs/Gleichspannungs-Wandler zum Eingang des A/D-Wandlers führenden Leitungsteil kann ein Schutzelement gegen Überspannungen vorgesehen sein. Dieses Element wirkt spannungsbegrenzend und schützt daher den A/D-Wandler vor Überspannung. Ein solches Schutzelement kann auch dann eingesetzt werden, wenn ein Ohmscher Spannungsteiler Anwendung findet.

In Weiterbildung der Erfindung kann ein dem A/D-Wandler nachgeschalteter Mikrocontroller vorgesehen sein. Ein solcher Mikrocontroller beinhaltet einen Mikroprozessor, der wiederum geeignet ist, Rechenschritte auszuführen. Der Mikrocontroller kann als separates Baueinheit einem A/D-Wandler, ggf. auch einem zusätzlichen Speicher nachgeordnet sein. Es ist aber auch möglich, den Mikrocontroller als eine gemeinsame Baueinheit mit dem A/D-Wandler auszubilden.

Es ist sinnvoll, wenn der A/D-Wandler einerseits und der Mikrocontroller andererseits an dem gleichen Referenzspannungsversorgungsteil angeschlossen sind. Bei dem Referenzspannungsversorgungsteil kann es sich um ein solches handeln, welches die Referenzspannung mit hoher Präzision bereitstellt.

Der Mikrocontroller kann eine Schnittstelle zur CAN-BUS-Kommunikation aufweisen. Damit ist es möglich, über die CAN-BUS-Leitung eine Information über den gemessenen Druck auch an andere Steuer- und Regelgeräte zu übertragen.

### KURZBESCHREIBUNG DER FIGUREN

Die Erfindung wird anhand bevorzugter Ausführungsformen weiter verdeutlicht und beschrieben. Es zeigen:
- **Fig. 1**: ein Blockschaltbild der Auswerteschaltung in einer ersten Ausführungsform, und
- **Fig. 2**: ein Blockschaltbild der Auswerteschaltung in einer zweiten Ausführungsform.

### FIGURENBESCHREIBUNG

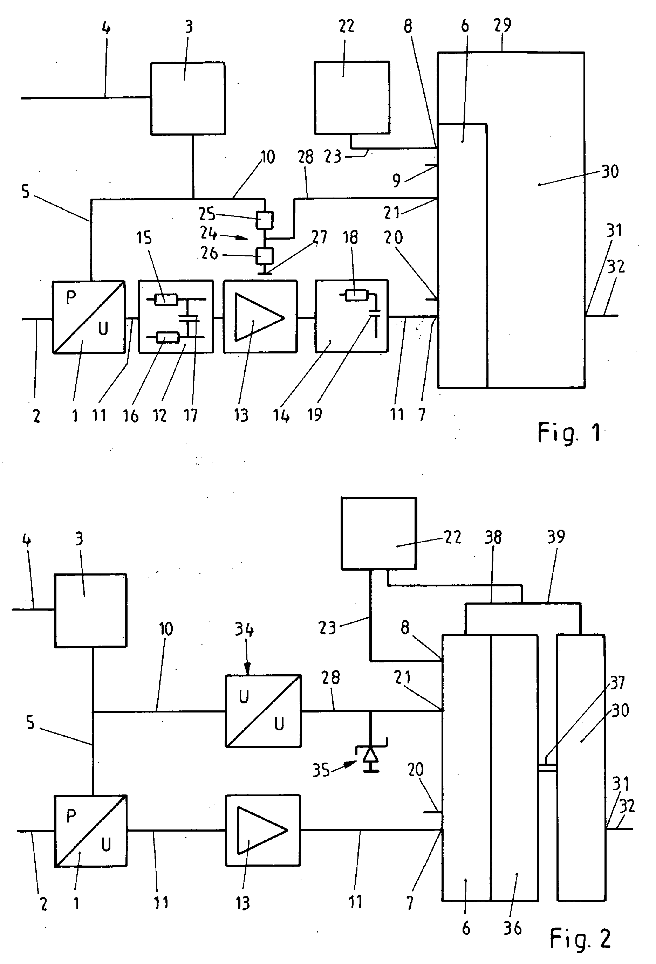

In **Fig. 1** ist ein Drucksensor 1 dargestellt, dem pneumatischer Druck über eine Leitung 2 zugeführt wird. Die Auswerteschaltung dient zur Messung dieses pneumatischen Druckes und zur Bereitstellung eines Ausgangssignals an einem A/D-Wandler. Zu diesem Zweck weist die Auswerteschaltung ein Gleichspannungsversorgungsteil 3 auf, welches seinerseits über eine Leitung 4 mit elektrischer Spannung versorgt wird. Vom Gleichspannungsversorgungsteil 3 führt eine Leitung 5 zu dem Drucksensor 1, über die die Spannungsversorgung des Drucksensors sichergestellt ist. Der andere Eingang des Drucksensors 1 bzw. der auf ihm angeordneten Ohmschen Messbrücke ist mit Masse verbunden.

Die Auswerteschaltung weist einen A/D-Wandler 6 auf, der zum Umsetzen der anliegenden Spannungssignale in digitale Werte dient. Der A/D-Wandler weist einen Eingang 7 für das zu messende Spannungssignal und zwei Referenzeingänge 8 und 9 auf. Der Referenzeingang 8 ist zur Aufnahme einer maximal ansteuerbaren Spannung bestimmt. Diese Referenzspannung wird von einem Referenzspannungsversorgungsteil 22 über eine Leitung 23 an dem A/D-Wandler 6 bereitgestellt. Der Referenzeingang 9 kann zur Aufnahme einer minimal ansteuerbaren Spannung bestimmt sein. Der Gleichspannungsversorgungsteil 3 ist über eine Leitung 10 an einem Ohmschen Spannungsteiler 24 angeschlossen. Der Ohmsche Spannungsteiler 24 weist zwei in Reihe geschaltete feste Widerstände 25 und 26 auf. Die Leitung 10 endet an Masse 27. Zwischen den festen Widerständen 25 und 26 zweigt ein Leitungsteil 28 ab, das zu einem Eingang 21 des A/D-Wandlers 6 führt.

Andererseits führt von dem Drucksensor 1 eine Leitung 11 zu dem Eingang 7 des A/D-Wandlers 6. Dem Drucksensor 1 ist in der Leitung 11 zunächst ein Filter 12, ein Messverstärker 13 und ein weiteres Filter 14 nachgeordnet. Das Filter 14 kann auch fehlen. Zusätzlich kann auch das Filter 12 entbehrlich sein. Der Messverstärker 13 ist aber auf jeden Fall erforderlich. Das Filter 12 kann zwei Widerstände 15 und 16 sowie einen Kondensator 17 aufweisen, wobei die Widerstände 15 und 16 jeweils in die Leitungen zwischen dem Drucksensor 1 und dem Messverstärker 13 eingeschaltet sind, während der Kondensator 17 zwischen diese beiden Leitungen angeordnet ist.

Auch das weitere Filter 14 kann einen Widerstand 18 und einen Kondensator 19 aufweisen, der mit Masse verbunden ist.

Wenn die Auswerteschaltung für die Messung des Druckes an mehreren Stellen, also für mehrere Drucksensoren 1 ausgebildet ist, enthält der A/D-Wandler 6 weitere Eingänge 20, 21 usw.

Der A/D-Wandler 6 kann in einer gemeinsamen Baueinheit 29 vorgesehen sein, die als weiteres wichtiges Element einen Mikrocontroller 30 aufweist. Der Mikrocontroller 30 kann eine Schnittstelle 31 für den Anschluss an eine Leitung 32 besitzen, über die eine CAN-BUS-Kommunikation stattfinden kann.

Der Gleichspannungsversorgungsteil 3 ist so ausgelegt und dazu bestimmt, eine höhere Spannung abzugeben, als sie für den A/D-Wandler 6 verträglich ist. Diese erhöhte Gleichspannung wird dem Drucksensor 1 über die Leitung 5 zugeführt. Die gleiche Gleichspannung wird auch dem Spannungsteiler 24 zugeführt. Über den Leitungsteil 28 gelangt jedoch nur eine entsprechende Teilspannung an den A/D-Wandler, und zwar in einem Wert, der kleiner ist als die maximal verträgliche Gleichspannung des A/D-Wandlers 6.

Das Referenzspannungsversorgungsteil 22 ist zur Abgabe einer Referenzgleichspannung ausgebildet und ausgelegt. Diese Referenzspannung kann 5 Volt betragen und ist so bemessen, dass sie für den A/D-Wandler 6 verträglich ist.

Von der Messbrücke des Drucksensors 1 wird ein Differenzspannungssignal abgegriffen und über die Leitung 11 dem Messverstärker 13 zugeführt. Dieses Differenzspannungssignal ist vergleichsweise größer als es einem zu vergleichenden Differenzspannungssignal aus dem Stand der Technik entspricht. Dieses Differenzspannungssignal muss daher in dem Messverstärker 13 vorteilhaft nur vergleichsweise geringer verstärkt werden, so dass das vom Messverstärker 13 abgegebene Signal am Eingang 7 noch unterhalb des Wertes liegt, welcher für den A/D-Wandler 6 verträglich ist. Die Einflüsse elektrischer Felder auf die Leitung 11 und die dort transportierten Differenzspannungssignale ist damit vergleichsweise geringer. Die Störanfälligkeit ist reduziert. Mit Hilfe des Mikrocontrollers 30 kann aus dem am Eingang 21 in den A/D-Wandler 6 überführten reduzierten proportionalen Gleichspannungssignals auf die von dem Gleichspannungsversorgungsteil 3 abgegebene und damit dem Drucksensor 1 zugeführte Gleichspannung rückgeschlossen werden. Auf diese Weise können Änderungen in der Gleichspannungsversorgung berücksichtigt werden.

In **Fig. 2** ist ein weiteres Ausführungsbeispiel einer Auswerteschaltung verdeutlicht. Bezüglich des Aufbaus und der Wirkungsweise kann zunächst auf die Ausführungsform der Fig. 1 verwiesen werden. Die Elemente in der Leitung 11 von dem Drucksensor 1 zu dem A/D-Wandler 6 sind hier vereinfacht dargestellt. Die Leitung 10 von dem Gleichspannungsversorgungsteil 3 ist hier nicht an Masse geführt, sondern endet in einem Gleichspannung/Gleichspannungs-Wandler 34, von dem der Leitungsteil 28 zum Eingang 21 des A/D-Wandlers 6 führt. An dem Leitungsteil 28 ist ein Schutzelement 35 gegen Überspannungen angeschlossen, welches die übertragbare Spannung auf einen solchen Wert begrenzt, für den der A/D-Wandler 6 ausgelegt bzw. bestimmt ist. Es versteht sich, dass das Schutzelement 35 auch an den Leitungsteil 28 der Ausführungsform gemäß Fig. 1 angeschlossen sein könnte.

Dem A/D-Wandler 6 ist hier ein Speicher 36 nachgeordnet, von dem wiederum Verbindungsleitungen 37 zu dem Mikrocontroller 30 führen. Der A/D-Wandler 6 wird von dem Referenzspannungsversorgungsteil 22 über die Leitung 23 mit Referenzspannung am Referenzeingang 8 versorgt. Von dem Referenzspannungsversorgungsteil 22 führt eine weitere Leitung 38 zu dem A/D-Wandler 6 und eine weitere Leitung 39 zu dem Mikrocontroller 30. Der Referenzspannungsversorgungsteil 22 kann eine Spannung von 5 Volt bereitstellen, wenn der A/D-Wandler 6 zur Aufnahme einer solchen maximalen Spannung ausgelegt und bestimmt ist.

### BEZUGSZEICHENLISTE

- 1: Drucksensor
- 2: Leitung
- 3: Gleichspannungsversorgungsteil
- 4: Leitung
- 5: Leitung
- 6: A/D-Wandler
- 7: Eingang
- 8: Referenzeingang
- 9: Referenzeingang
- 10: Leitung

- 11: Leitung
- 12: Filter
- 13: Messverstärker
- 14: Filter
- 15: Widerstand
- 16: Widerstand
- 17: Kondensator
- 18: Widerstand
- 19: Kondensator
- 20: Eingang

- 21: Eingang
- 22: Referenzversorgungsteil
- 23: Leitung
- 24: Spannungsteiler
- 25: Widerstand
- 26: Widerstand
- 27: Masse
- 28: Leitungsteil
- 29: Baueinheit
- 30: Mikrocontroller

- 31: Schnittstelle
- 32: Leitung
- 33 34: GS/GS-Wandler
- 35: Schutzelement
- 36: Speicher
- 37: Verbindungsleitungen
- 38: Leitung
- 39: Leitung

## Patentansprüche

1. Verfahren zum Messen eines Druckes auf einem Nutzfahrzeug, mit einem eine Ohmsche Messbrücke aufweisenden monolithischen keramischen Drucksensor, wobei die Messbrücke des Drucksensors und ein Eingang eines A/D-Wandlers aus einem Gleichspannungsversorgungsteil mit Gleichspannung versorgt wird, der Referenzeingang des A/D-Wandlers mit einer Referenzspannung versorgt wird, und wobei das von der Ohmschen Messbrücke abgegebene Differenzspannungssignal verstärkt und einem Eingang des A/D-Wandlers zur Auswertung des von der Messbrücke abgegebenen Differenzspannungssignals zugeführt wird, **dadurch gekennzeichnet, dass** die Messbrücke des Drucksensors mit einer über dem zulässigen Wert der Spannungsversorgung für den A/D-Wandler liegenden Gleichspannung versorgt wird, dass der A/D-Wandler an einen weiteren Eingang mit einer zur Gleichspannungsversorgung der Messbrücke proportionalen reduzierten Gleichspannung versorgt wird, und dass die der Messbrücke des Drucksensors zugeführte Gleichspannung mit einer Soll-Versorgungsgleichspannung der Messbrücke des Drucksensors verglichen und das verstärkte Differenzspannungssignal entsprechend der Abweichung der Gleichspannungsversorgung der Messbrücke des Drucksensors von der Soll-Versorgungsgleichspannung korrigiert wird.

2. Verfahren nach Anspruch 1, **dadurch gekennzeichnet, dass** zur Korrektur des verstärkten Differenzspannungssignals dieses mit dem Verhältnis der der Messbrücke des Drucksensors zuzuführenden Soll-Versorgungsgleichspannung zu der der Messbrücke des Drucksensors zugeführten Gleichspannung multipliziert wird.

3. Auswerteschaltung für einen und mit einem eine Ohmsche Messbrücke aufweisenden monolithischen keramischen Drucksensor (1), insbesondere nach mindestens einem der Ansprüche 1 bis 2, mit einem Gleichspannungsversorgungsteil (3) für die Messbrücke des Drucksensors (1), einem dem Drucksensor (1) nachgeschalteten Messverstärker (13) und einem Eingänge (7, 21) und einen Referenzeingang (8) aufweisenden A/D-Wandler (6) zur Auswertung der von der Messbrücke abgegebenen Differenzspannungssignale, einem an den Referenzeingang (8) des A/D-Wandlers (6) angeschlossenen Referenzspannungsversorgungsteil (22), und einer Leitung (10, 28) zur Übertragung der von dem Gleichspannungsversorgungsteil (3) für die Messbrücke bereitgestellten Gleichspannung an einem Eingang (21) des A/D-Wandlers (6), **dadurch gekennzeichnet, dass** das Gleichspannungsversorgungsteil (3) zur Abgabe einer über dem zulässigen Wert der Spannungsversorgung des A/D-Wandlers (6) liegenden Gleichspannung ausgebildet ist, und dass in der Leitung (10, 28) eine Einrichtung zur proportionalen Reduzierung der über dem zulässigen Wert der Spannungsversorgung des A/D-Wandlers (6) liegenden Gleichspannung des Gleichspannungsversorgungsteils (3) auf einen unterhalb des zulässigen Wertes der Gleichspannung am Eingang des A/D-Wandlers (6) liegenden Wert vorgesehen ist.

4. Auswerteschaltung nach Anspruch 3, **dadurch gekennzeichnet, dass** als Einrichtung zur proportionalen Reduzierung der Gleichspannung des Gleichspannungsversorgungsteils (3) ein Ohmscher Spannungsteiler (24) vorgesehen ist.

5. Auswerteschaltung nach Anspruch 4, **dadurch gekennzeichnet, dass** der Ohmsche Spannungsteiler (24) zwei in Reihe geschaltete feste Widerstände (25, 26) aufweist, zwischen denen der zu dem Eingang (21) des A/D-Wandlers (6) führende Leitungsteil (28) abzweigt.

6. Auswerteschaltung nach Anspruch 3, **dadurch gekennzeichnet, dass** als Einrichtung zur proportionalen Reduzierung der Gleichspannung des Gleichspannungsversorgungsteils (3) ein Gleichspannung/Gleichspannungs-Wandler (34) vorgesehen ist.

7. Auswerteschaltung nach Anspruch 6, **dadurch gekennzeichnet, dass** in dem vom Gleichspannung/Gleichspannungs-Wandler (34) zum Eingang (21) des A/D-Wandlers (6) führenden Leitungsteil (28) ein Schutzelement (35) gegen Überspannungen vorgesehen ist.

8. Auswerteschaltung nach mindestens einem der Ansprüche 3 bis 7, **dadurch gekennzeichnet, dass** ein dem A/D-Wandler nachgeschalteter Mikrocontroller (30) vorgesehen ist.

9. Auswerteschaltung nach Anspruch 8, **dadurch gekennzeichnet, dass** der A/D-Wandler (6) und der Mikrocontroller (30) an den gleichen Referenzspannungsversorgungsteil (22) angeschlossen sind.

10. Auswerteschaltung nach mindestens einem der Ansprüche 8 und 9, **dadurch gekennzeichnet, dass** der Mikrocontroller (30) eine Schnittstelle (31) zur CAN-BUS-Kommunikation aufweist.
